(19) **Europäisches Patentamt European Patent Office Office européen des brevets**

(11) **EP 4 579 075 A1**

(12) **EUROPEAN PATENT APPLICATION**
published in accordance with Art. 153(4) EPC

(43) Date of publication:
02.07.2025 Bulletin 2025/27

(21) Application number: 23856499.1

(22) Date of filing: 14.08.2023

(51) International Patent Classification (IPC):
*F03D 7/04* (2006.01)    *G06F 30/20* (2020.01)

(52) Cooperative Patent Classification (CPC):
Y02E 10/72

(86) International application number:
PCT/CN2023/112884

(87) International publication number:
WO 2024/041409 (29.02.2024 Gazette 2024/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.08.2022 CN 202211035570
30.11.2022 CN 202211535399

(71) Applicant: Beijing Goldwind Science & Creation
Windpower Equipment Co. Ltd.
Beijing 100176 (CN)

(72) Inventors:
• WANG, Minghui
  Beijing 100176 (CN)
• ZHANG, Pengfei
  Beijing 100176 (CN)
• KANG, Weixin
  Beijing 100176 (CN)

(74) Representative: Hoffmann Eitle
Patent- und Rechtsanwälte PartmbB
Arabellastraße 30
81925 München (DE)

(54) **METHOD AND APPARATUS FOR DETERMINING REPRESENTATIVE WIND GENERATING SET, AND CONTROL METHOD AND APPARATUS**

(57) Provided are a method and apparatus for determining a representative wind generating set, and a control method and apparatus. The method for determining a representative wind generating set comprises: determining an always-on representative set of each sector; according to working condition parameters of each always-on representative set, identifying wind conditions of the sector where each always-on representative set is located; on the basis of the wind conditions of each sector, selecting, as virtual representative parts, set parts of a predetermined part type; and on the basis of the virtual representative parts of each sector under different wind conditions, constructing virtual representative sets of each sector in different operation modes.

| |
|---|
| Determine a sector representative turbine for each sector based on wind resource information in the wind farm — S11 |
| Based on an operating-condition parameter of the sector representative turbine for each sector, identify a wind condition in each sector — S12 |
| Select turbine parts with respective predetermined types from wind turbines in each sector as virtual representative parts based on the wind condition in each sector — S13 |
| Construct a virtual representative turbine for each sector under each operation mode based on the virtual representative parts for each sector under each wind condition — S14 |

FIG. 1

EP 4 579 075 A1

**Description**

**FIELD**

The present disclosure relates to the field of wind power generation, and in particular to a method and an apparatus for determining a representative wind turbine and a method and an apparatus for controlling a wind farm.

BACKGROUND

Developing renewable energy has become a major action in energy development strategies of countries around the world as the global energy crisis intensifies. Wind power generation is widely researched since wind energy has the characteristics of abundant global reserves, being renewable, wide distribution, and pollution-free.
It is necessary to select one or more representative wind turbines in a wind farm in many scenarios, such as customized design of the wind farm, determining a representative wind turbine for a wind farm cluster controller, and determining a representative wind turbine for comparing generated power. Therefore, it is crucial to determine an appropriate representative wind turbine.

SUMMARY

The object of embodiments according to the present disclosure is to provide a method and an apparatus for determining a representative wind turbine and a method and an apparatus for controlling a wind farm.
In a first aspect, a method for determining a representative wind turbine in a wind farm is provided according to the embodiment of the present disclosure. The method includes: determining a sector representative turbine for each sector based on wind resource information in the wind farm; based on an operating-condition parameter of the sector representative turbine for each sector, identifying a wind condition in each sector; selecting turbine parts with respective predetermined types from wind turbines in each sector as virtual representative parts based on the wind condition in each sector; and constructing a virtual 1 representative turbine for each sector under each operation mode based on the virtual representative parts for each sector under each wind condition.
In a second aspect, a method for controlling a wind farm is provided according to the embodiment of the present disclosure. The method for controlling the wind farm includes: determining a sector representative turbine for each sector based on wind resource information in the wind farm; identifying an operation mode for each sector where the sector representative turbine locates, based on an operating-condition parameter of each sector representative turbine; acquiring an operating parameter of a virtual representative turbine for each sector under an identified operation mode for the sector, wherein the virtual representative turbine is determined based on the method for determining a representative wind turbine in a wind farm described above; regulating control parameters for wind turbines in each sector based on the operating parameter of the virtual representative turbine for the sector; and controlling the wind turbines in each sector based on regulated control parameters.
In a third aspect, a system for controlling a wind farm is provided according to the embodiment of the present disclosure, the system for controlling a wind farm includes: a farm-level controller, including the apparatus for controlling a wind farm according to the embodiment of the present disclosure, and configured to send control instructions to each wind turbine; and a stand-alone controller, arranged in each wind turbine, and configured to control an operation of the wind turbine, based on control instructions received from the farm-level controller.
In a fourth aspect, a computer readable storage medium storing a computer program is provided according to the embodiment of the present disclosure. The computer program, when executed by the processor, implements the method for determining a representative wind turbine in a wind farm or the method for controlling a wind farm described above.
In a fifth aspect, a controller is provided according to the embodiment of the present disclosure. The controller includes: a processor; and a memory storing a computer program, where the computer program, when executed by the processor, implements the method for determining a representative wind turbine in a wind farm or the method for controlling a wind farm described above.
At least one of the following technical effects is achieved with the method and the apparatus for determining a representative wind turbine in a wind farm, the method and the apparatus for controlling a wind farm, the system for controlling a wind farm, the computer-readable storage medium and the controller provided in the embodiments of the present disclosure. A virtual representative turbine can be constructed through selecting turbine parts according to predetermined types in the wind farm based on operating characteristics of the wind farm (for example, wind resource information in the wind farm and operating-condition parameters of the wind turbines), to establish a database of virtual representative turbine models. Operating conditions of the wind farm under different wind conditions can be identified accurately and rapidly in a real-time control process, based on the sector representative turbines and the virtual representative turbines. A real-time cluster control of the wind farm is improved (for example, within a second level) and safe operation for each wind turbine in the wind farm is guaranteed, since the virtual representative turbines change with a change of an operation feature of the wind farm.

BRIEF DESCRIPTION OF THE DRAWINGS

The above and other objects, features, and advantages of the present disclosure will be more apparent through the detail description in conjunction with the drawings of the exemplary embodiments.

FIG. 1 is a flowchart of a method for determining a representative wind turbine according to an exemplary embodiment of the present disclosure;

FIG. 2 is a flowchart of a method for determining a representative wind turbine according to another exemplary embodiment of the present disclosure;

FIG. 3 is a schematic diagram illustrating a coordinate system for determining a representative wind turbine according to an exemplary embodiment of the present disclosure;

FIG. 4 is a flowchart of a method for determining a representative wind turbine according to another exemplary embodiment of the present disclosure;

FIG. 5 is a schematic diagram illustrating a data flow of acquiring data for identifying a wind condition according to an exemplary embodiment of the present disclosure;

FIG. 6 is a flowchart of a method for determining a representative wind turbine according to another exemplary embodiment of the present disclosure;

FIG. 7 is a flowchart of a method for controlling a wind farm according to an exemplary embodiment of the present disclosure;

FIG. 8 is a block diagram of an apparatus for determining a representative wind turbine according to an exemplary embodiment of the present disclosure;

FIG. 9 is a block diagram of an apparatus for controlling a wind farm according to an exemplary embodiment of the present disclosure;

FIG. 10 is a block diagram of some parts of an apparatus for controlling a wind farm according to an exemplary embodiment of the present disclosure;

FIG. 11 is a schematic diagram illustrating a cluster control of a wind farm according to an exemplary embodiment of the present disclosure; and

FIG. 12 is a block diagram of a controller according to an exemplary embodiment of the present disclosure.

**DETAILED DESCRIPTION**

More wind power bases are established as the process of carbon neutrality accelerates. Compared with a traditional centralized wind farm, a large-base wind farm has the following characteristics: a large installed capacity (generally more than 300MW) of the whole wind farm, a large number of installed wind turbines (generally more than 50 wind turbines), and a large wind farm area, resulting in an extremely large amount of operating data for wind turbines in the wind farm. In addition, wind resources vary significantly across the large wind farm area, resulting in significant differences in operating performance of the wind turbines. Since a cluster control (such as a load adaptive control or a wake control) for the wind farm based on the operating data of the wind turbines in the wind farm is difficult to fulfill a real-time control requirement due to limitation of an amount and efficiency in calculation, it is necessary to select one or more representative wind turbines in the wind farm to represent operating statuses of respective wind turbines in the wind farm, and further to control the wind farm. Therefore, current researches are focused on how to select representative wind turbines and how to perform wind farm control in a real time manner based on the representative wind turbines.

It is difficult for traditional representative wind turbines to represent the operating statuses of all wind turbines in the wind farm under certain wind conditions, especially under extreme wind conditions, due to a real-time fluctuation of the wind, so that the traditional representative wind turbines cannot be used for wind farm control. Therefore, representative wind turbines are generally used to evaluate the power generation of the wind farm only in the conventional control of the wind farm, and are difficult to be applied to control all wind turbines in the wind farm. In addition, the conventional wind farm control is generally based on real-time operating data or historical operating data of the wind turbines in the wind farm, rather than only using operating data of the representative wind turbines as an input source for wind farm control.

A method and an apparatus for determining a representative wind turbine in a wind farm and a method and an apparatus for controlling a wind farm by using a representative wind turbine are provided in the present disclosure. In the embodiments of the present disclosure, based on operating characteristics of the wind farm (for example, wind resource information and operating parameters of the wind turbines in the wind farm), a virtual representative turbine is constructed by selecting appropriate parts according to part types in the wind farm. The virtual representative turbine changes according to a change of operating characteristics. The change of the operating characteristics can be identified through sector representative wind turbines determined based on the wind resource information in the wind farm. The real-time farm control of a large-scale wind farm is improved (for example, within a second level) by using operating parameters of the virtual representative turbines as input for farm control of the wind farm. In addition, operating conditions of the wind farm under different wind conditions can be identified accurately and rapidly based on the sector representative turbines and the virtual representative turbines. Each wind turbine in the wind farm can be controlled in real time based on a real-time output of the virtual representative turbines, so that each wind turbine in the wind farm operates in a designed logic (such as dynamic sector management, wake cooperative control, load adaptive control), while the safe operation for each wind turbine in the wind farm is guaranteed.

A description of embodiments is provided below in conjunction with the drawings to assist the reader in gaining a comprehensive understanding of the method, apparatus, and/or system described herein. However, various changes, modifications, and equivalents of the method, apparatus, and/or system described herein may be clear upon the understanding of the present disclosure. For example, an order of operations described herein is only an example and is not limited to those described herein, but may be changed as would be clear after understanding the present disclosure, except for operations that must occur in a specific order. In addition, descriptions of features known in the art may be omitted for clarity and conciseness.

The features described herein may be implemented in different forms and should not be limited to the examples described herein. On the contrary, the examples described herein are provided to illustrate only some of the feasible approaches to implementing the method, apparatus, and/or system described herein, while many other feasible approaches would be clear upon the understanding of the present disclosure.

As used herein, term "and/or" includes any one of listed items associated with the term, and any combination of any two or more of the items.

Although terms "first", "second," "third" and the like may be used herein to describe various components, elements, regions, layers, or parts, these components, elements, regions, layers, or parts should not be limited by these terms. On the contrary, these terms are only used to distinguish one component, element, region, layer, or part from another component, element, region, layer, or part. Therefore, without departing from the teachings of the examples, a first component, first element, first region, first layer, or first part referred to in the examples described herein may alternatively be referred to as a second component, second element, second region, second layer, or second part.

The terms used herein are only for describing various examples and are not intended to limit the present disclosure. Unless explicitly indicated in the context otherwise, a singular form is also intended to include a plural form. Terms "include," "comprise," and "have" indicate the existence of a mentioned feature, quantity, operation, component, element, and/or combination thereof, but do not exclude the existence or addition of one or more other features, quantities, operations, components, elements, and/or combinations thereof.

Unless defined otherwise, all terms used herein (including technical terms and scientific terms) have the same meanings as those commonly understood by those skilled in the art to which the present disclosure belongs upon the understanding of the present disclosure. Unless explicitly defined otherwise, terms (such as terms defined in a general dictionary) should be interpreted as having meanings consistent with their respective contexts in the relevant field and in the present disclosure, and should not be interpreted ideally or too formally.

In addition, in the description of the examples, the detailed description of well-known relevant structures or functions is omitted when it is believed that the detailed description may lead to ambiguity in the present disclosure.

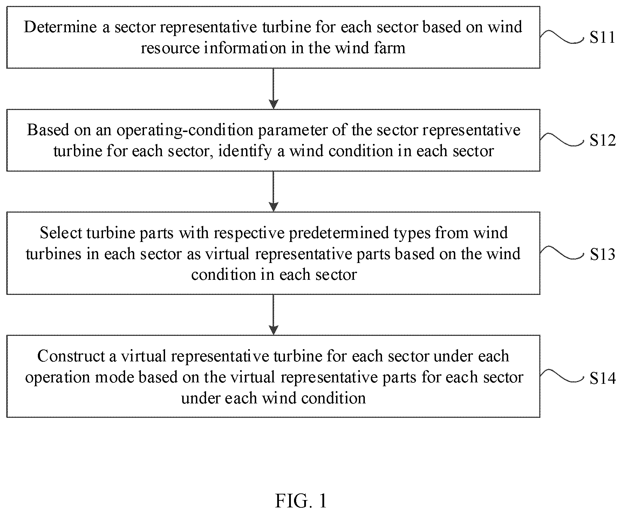

FIG. 1 is a flowchart of a method for determining a representative wind turbine according to an exemplary embodiment of the present disclosure.

As shown in FIG. 1, a sector representative turbine for each sector is determined based on wind resource information in the wind farm (S11). In an embodiment of the present disclosure, the wind resource information may include at least one of the following items: a direction of an incoming wind, an average wind speed, probability density distribution for wind speed, an overall turbulence intensity, an inflow angle, wind shear, air density, a wake effect, and an extreme wind condition in a sector where each wind turbine is located. The wind resource information can be acquired through any device that monitors or predicts wind speed data in the wind farm. For example, the wind resource information may be acquired through wind-detecting radar that is able to monitor wind direction and wind speed.

In an embodiment of the present disclosure, the wind resource information and terrain information of the wind farm can be acquired, and all wind turbines are classified based on the acquired wind resource information and terrain information to divide the wind farm into multiple sectors. Here, the terrain information indicates a geographical characteristic of an area where the wind farm is located, and may include at least one of the following items, for the sector where each wind turbine is located: a slope grade, a ruggedness index grade, and a comprehensive terrain grade determined by the slope grade and the ruggedness index grade. The terrain information can be obtained through any device that monitors or predicts the geographical information in the wind farm, for example, through a lidar capable of surveying and mapping terrain.

For example, the wind farm may be divided into multiple sectors based on the terrain information. A geographical coordinate system of the wind farm may be established with true north as a positive direction, and the wind farm is divided into multiple sectors based on the geographical coordinate system. In a case that an incoming wind comes from a certain sector, a wind turbine that receives the incoming wind first (i.e., the first wind turbine in an upwind direction) of the sector is set as the sector representative wind turbine of the sector.

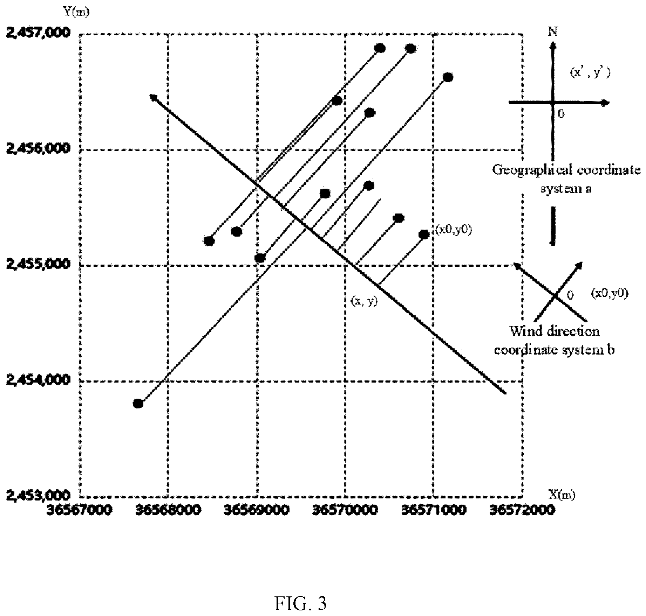

Sectors obtained by dividing based on the geographical coordinate system may be determined as initial sectors. The sector representative wind turbine for each initial sector is determined by converting the geographical coordinate system based on the incoming wind direction in the wind farm. For example, the geographical coordinate system may be converted into a wind direction coordinate system based on the incoming wind direction in the wind farm; and the sector representative wind turbine for each initial sector is determined in the wind direction coordinate system. FIG. 3 is a schematic diagram illustrating a coordinate system for determining a representative wind turbine according to an exemplary embodiment of the present disclosure.

As shown in FIG. 3, the geographical coordinate system a in which the true north direction N is the positive direction of the y-axis can be converted into the wind direction coordinate system b in which the opposite direction of the incoming wind is the positive direction of the y-axis. In this way, the geographical coordinates $(x', y')$ in the geographical coordinate system a can be converted into the wind direction coordinates $(x0, y0)$ in the wind direction coordinate system b. For each sector, the sector representative wind turbine can be determined based on a y-axis projection value in the wind direction coordinate system. For example, a wind turbine corresponding to a turbine point with a minimum y-axis projection value in the wind direction coordinate system can be determined as the sector representative wind turbine for the sector. In this way, the representative wind turbines for respective sectors are determined, and the number of sectors may be equal to the number of the sector representative wind turbines.

In an embodiment of the present disclosure, sectors obtained by dividing based on the geographical coordinate system may be determined as initial sectors. The sector representative turbine for each initial sector is determined based on the y-axis projection value in the wind direction coordinate system, where a positive direction for the y-axis is an opposite direction of the incoming wind.

In an embodiment of the present disclosure, all wind turbines can be classified to obtain wind turbine sets each including multiple wind turbines, based on obtained relevant data and taking a wind-turbine load as a constraint. Each wind turbine belongs to multiple sectors corresponding to respective classification manners. All sectors are classified to obtain multiple sector groups, based on the obtained relevant data and taking a sector load as a constraint. The number of sector groups is equal to the number of wind turbine sets. For each wind turbine, in a case that the number of sectors, to which the wind turbine belongs and which corresponds to respective classification manners, belonging to the same sector group exceeds a predetermined number, the sector group with the number of sectors exceeding the predetermined number is determined as a corresponding wind turbine set for this wind turbine. For example, all sectors are classified based on the obtained wind resource information and terrain information, to obtain multiple wind resource groups through classifying by wind resource information, multiple terrain groups through classifying by terrain information, and multiple comprehensive groups through classifying by the wind resource information and the terrain information. Here, each of the number of wind resource groups, the number of terrain groups, and the number of comprehensive groups is identical with the number of wind turbine sets. A load adaptability level for each wind resource group, each terrain group, and each comprehensive group is determined respectively. Sectors with the same load adaptability level in the multiple wind resource groups, the multiple terrain groups, and the multiple comprehensive groups are determined as a sector group. For another example, the multiple wind resource groups can be acquired by classifying all sectors through a cluster analysis method, based on the obtained wind resource information of all the sectors; the multiple terrain groups can be acquired by classifying all sectors through a cluster analysis method, based on the obtained terrain information of all the sectors; and the multiple comprehensive groups can be acquired by classifying all sectors through a cluster analysis method, based on the obtained wind resource information and terrain information of all the sectors. During classifying, the obtained wind resource information may be normalized, and all sectors are classified based on the normalized wind resource information to obtain the multiple wind resource groups; all sectors are classified based on the terrain information and the normalized wind resource information to obtain the multiple comprehensive groups. In addition, the nominal value corresponding to the wind resource information during the normalization process may be regulated to ensure that all sectors can be classified into corresponding sector groups.

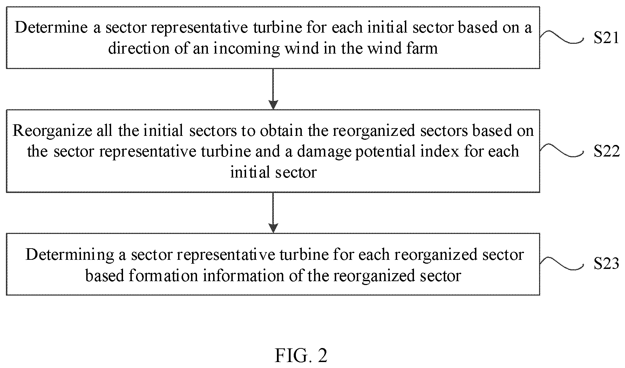

In another embodiment of the present disclosure, the sectors are reorganized sectors after reorganizing all initial sectors in the wind farm. The sector reorganization operation is illustrated below with reference to FIG. 2.

FIG. 2 is a flowchart of a method for determining a representative wind turbine according to another exemplary embodiment of the present disclosure.

As shown in FIG. 2, a sector representative wind turbine for each initial sector is determined based on an incoming wind direction in the wind farm (S21). As described above, the sector representative wind turbine for each initial sector may be determined by converting the coordinate system.

The reorganized sectors are acquired by reorganizing all the initial sectors, based on the sector representative turbine and a damage potential index for each sector, where the damage potential index is determined based on a wind speed, a probability density for the wind speed, and a turbulence intensity for the wind speed (S22). For example, the damage potential index may be calculated based on the following formula.

$$X_{total} = \left[ \sum^{i,j,N} p_{i,j,N} (u_{i,j,N} Ti_{i,j,N})^m \right]^{\frac{1}{m}} \quad (1)$$

where, $X_{total}$ represents a total damage potential of the wind farm, i represents an identifier of the wind speed, j represents an identifier of the sector, N represents a serial number of a wind turbine, and j = N, that is, the sector representative wind turbine for each sector is determined; $P_{i,j,N}$ is a probability density of the i-th wind speed in the j-th sector where the sector representative wind turbine with the Turbine number N is located; $u_{i,j,N}$ is the i-th wind speed in a wind speed matrix U = [$V_{cutin}$, ... , $V_{cutout}$, ... , $0.7V_{ref}$], where $V_{cutin}$ is a cut-in wind speed, $V_{cutout}$ is a cut-out wind speed, $V_{ref}$ is an average wind speed within 10 minutes of the extreme wind conditions that occur once in fifty years; $Ti_{i,j,N}$ is a turbulence intensity of the i-th wind speed in the j-th sector where the sector representative wind turbine with the Turbine number N is located; m is a Wall index of the material of a main part (such as a blade, a hub, a base, or a tower) in the wind turbine, e.g., the value of m for cast iron is generally 4, and the value of m for fiberglass is 9 or 10.

The damage potential index $XI_j$ for the j-th sector is defined as:

$$XI_j = \frac{\left[ \sum^{i} p_i (u_{i,j} Ti_{i,j})^m \right]^{\frac{1}{m}}}{X_{total}} \quad (2)$$

It is assumed that the wind farm has n initial sectors, sectors may be reorganized based on a damage potential index difference between two adjacent initial sectors. For example, the damage potential index difference $\Delta_{N,j}$ between the two adjacent sectors can be calculated in a clockwise direction, as follows:

$$\Delta_{N,j} = \begin{cases} |XI_{N,j} - XI_{N-1,j-1}|, N = j = 1, 2, ..., n-1 \\ |XI_{0,0} - XI_{n,n}|, N = j = 0 \end{cases} \quad (3)$$

For example, the two adjacent initial sectors are merged into a reorganized sector, in a case that the damage potential index difference between the two adjacent initial sectors is minimum and less than a predetermined index difference (for example, 0.1); or, two adjacent sectors including a reorganized sector and an initial sector are merged into a reorganized sector, in a case that the damage potential index difference between these two adjacent sectors including the reorganized sector and the initial sector is minimum and less than the preset index difference.

In a case that a first reorganized sector is formed by merging two initial sectors, a serial number of an initial sector with a larger damage potential index in the two adjacent sectors is determined as a serial number of the first reorganized sector; and in a case that a second reorganized sector is formed by merging two adjacent sectors including a reorganized sector and an initial sector, a serial number of the initial sector is determined as a serial number of the second reorganized sector.

In the embodiment of the present disclosure, merging is only performed on the initial sectors or on an initial sector and a reorganized sector, and the reorganized sectors are not merged. As described above, reorganization can be performed on the sectors repeatedly, until merging cannot be performed any more. In this way, unnecessary information processing is reduced, subsequent calculation efficiency is improved, excessive merging is prevented, and it is ensured to extract sufficient effective information.

In addition, a sector representative wind turbine for each reorganized sector is determined based on composition information of each reorganized sector (S23). For example, composition information of a reorganized sector may indicate whether the reorganized sector is obtained by merging and/or which types of sectors are merged to obtain the reorganized sector. The composition information may indicate one type of the following information: the reorganized sector being not obtained by merging, that is, the reorganized sector is an initial sector; the reorganized sector being formed by merging two adjacent initial sectors; or the reorganized sector being formed by merging two adjacent sectors including a reorganized sector and an initial sector.

For example, in a case that a first reorganized sector is formed by merging two adjacent initial sectors, a sector representative turbine for an initial sector with a larger damage potential index in the two adjacent initial sectors is determined as a sector representative turbine for the first reorganized sector.

For example, in a case that a second reorganized sector is formed by merging two adjacent sectors including a reorganized sector an initial sector, a sector representative turbine for the initial sector is determined as a sector representative turbine for the second reorganized sector.

The management of the representative wind turbines and the sectors to which they belong can be optimized by reorganizing the sectors, thereby facilitating accurate assessment of wind conditions in different sectors.

Reference is made to FIG. 1 again, where a wind condition of each sector is identified based on an operating-condition parameter of a sector representative wind turbine for the sector (S12). For example, the operating-condition parameter may include measured wind speed data or turbine operating data of the sector representative wind turbine. An operation mode of the representative wind turbine can be identified based on the operating-condition parameter. The wind condition may include at least one of the following: a wind condition for a normal power generation operation, a wind condition for an extreme power generation operation, a wind condition for a normal shut-down operation, and a wind condition for an extreme shut-down operation. The wind condition for the normal power generation operation indicates a wind condition under which the wind turbine is allowed to perform the normal power generation operation, for example, the wind speed is within a normal wind speed range (that is, between the cut-in wind speed to and the cut-out wind speed) and the turbulence intensity is within a normal turbulence range (that is, less than or equal to a turbulence intensity threshold). Correspondingly, under the wind condition for the normal power generation operation, the operation mode of the wind turbine is a normal power generation operating-condition. The wind condition for the extreme power generation operation indicates a wind condition under which the wind turbine is allowed to perform the extreme power generation operation. The turbulence intensity under the wind condition for the extreme power generation operation is larger than that under the wind condition for the normal power generation operation. For example, the wind speed is within the normal wind speed range (that is, between the cut-in wind speed and the cut-out wind speed), and the turbulence intensity is greater than or equal to the turbulence intensity threshold and is lower than an extreme turbulence intensity. Correspondingly, under wind condition for the extreme power generation operation, the operation mode of the wind turbine is an extreme power generation operating-condition. The wind condition for the normal shut-down operation indicates a wind condition that triggers the normal shutdown operation of the wind turbine. Correspondingly, under the wind condition for the normal shut-down operation, the operation mode of the wind turbine is a normal shutdown operating-condition. The wind condition for the extreme shut-down operation indicates a wind condition that triggers the extreme shut-down operation of the wind turbine. Correspondingly, under the wind condition for the extreme shut-down operating, the operation mode of the wind turbine is an extreme shutdown operating-condition.

Under the wind condition for the normal power generation operation, the wind turbine can generate electricity normally. A real-time measured wind speed is generally within the range from the cut-in wind speed $V_{cutin}$ to the cut-out wind speed $V_{cutout}$, and the turbulence intensity is less than or equal to the turbulence intensity threshold ($I_{ref} + \delta$), where, $I_{ref}$ represents a set value of the turbulence intensity, and $\delta$ is a constant (for example, 0.02).

Under the wind condition for the extreme power generation operation, the wind turbine can generate electricity in this case, but a relatively large damage may occur in the wind turbine. The real-time measured wind speed is generally in the range from the cut-in wind speed $V_{cutin}$ to the cut-out wind speed $V_{cutout}$, and the turbulence intensity is between the turbulence threshold ($I_{ref} + \delta$) and the extreme turbulence intensity ETM (for example, the measured extreme turbulence intensity within 10 minutes under an extreme turbulence situation that occurs once in fifty years).

Under the wind condition for the normal shut-down operation, the real-time measured wind speed $wsp < V_{cutin}$ and the turbulence intensity $Ti$ meets $ETM < Ti \le ETM + \delta$; or the real-time measured wind speed $wsp$ meets $V_{cutout} < wsp < 0.7V_{ref}$ and the turbulence intensity Ti meets $0 < Ti \le ETM + \delta$, where $V_{ref}$ may be an average wind speed within 10 minutes under an extreme wind condition that occurs once in fifty years.

Under the wind condition for the extreme shut-down operation, $V_{cutin} < wsp < 0.7V_{ref}$ and $Ti > ETM + \delta$; or $wsp > 0.7V_{ref}$ and $Ti > 0$.

In the wind turbine design specifications, it is possible to obtain a standard deviation $\sigma_1$ through the following formula according to the set value of the turbulence intensity $I_{ref}$ to estimate a value of ETM:

$$\sigma_1 = cI_{ref}\left(0.072\left(\frac{V_{ave}}{c} + 3\right)\left(\frac{V_{hub}}{c} - 4\right) + 10\right) \quad (4)$$

where, c is a wind speed (for example, 2m/s) set in advance according to an empirical formula, $V_{ave}$ represents a cumulative average wind speed up to this moment, and $V_{hub}$ represents an average wind speed within 10 minutes before this moment.

Wind conditions correspond to respective operation modes of the wind turbine. For example, the wind condition for normal power generation operation corresponds to the normal power generation operating-condition, the wind condition for the extreme power generation operation corresponds to the extreme power generation operating-condition, the wind condition for the normal shut-down operation corresponds to the normal shut-down operating-condition, and the wind condition for the extreme shut-down operation corresponds to the extreme shut-down operating-condition. Therefore, the operation mode (for example, the normal power generation operating-condition, the extreme power generation operating-condition, the normal shut-down operating-condition, the extreme shut-down operating-condition, idling, etc.) of each representative wind turbine can be determined based on the operating-condition parameters of each representative wind turbine, so that wind condition of the sector where the sector representative wind turbine is located can be identified.

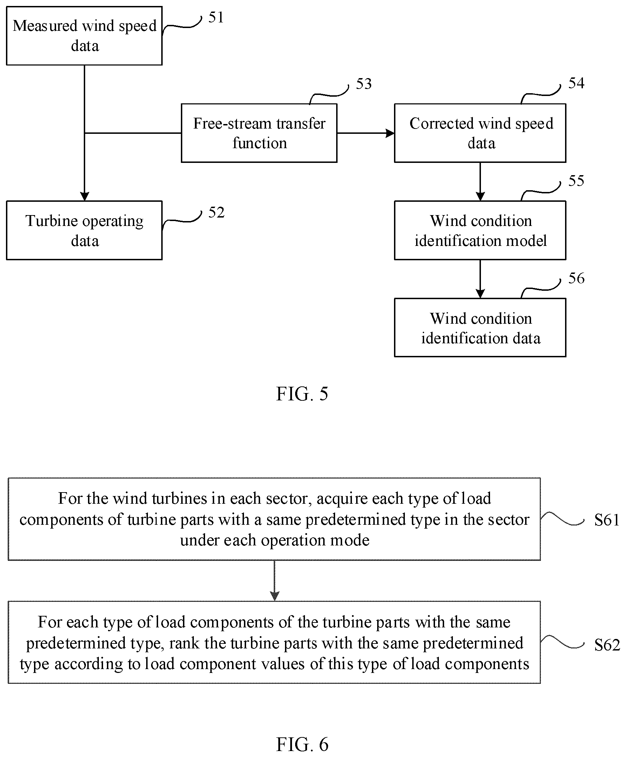

In addition, wind-condition identification may be corrected with a free-stream transfer function. FIG. 5 is a schematic diagram illustrating a data flow of acquiring data for identifying a wind condition according to an exemplary embodiment of the present disclosure.

As shown in FIG. 5, the measured wind speed data 51 (for example, the measured wind speed data obtained through the wind speed measuring instrument on the nacelle) corresponding to the sector representative wind turbine and turbine operating data 52 (including the operating-condition parameters of the sector representative wind turbine, which can be obtained, for example, through a SCADA system (Supervisory Control and Data Acquisition System) of the wind farm) of the wind turbine can be input to the free-stream transfer function 53 to correct the input data, so that the corrected wind speed data 54 is obtained. The corrected wind speed data 54 is input to a wind-condition identification model 55 to output wind-condition identification data 56. Since the measured wind speed data corresponding to the sector representative wind turbine is measured by a sensor of its own and the turbulence is disturbed by the wake effect, the correction operation described above can effectively improve wind-condition identification.

Referring to FIG. 1 again, turbine parts with respective predetermined types are selected from wind turbines in each sector as virtual representative parts, based on the wind condition in each sector (S13).

In an embodiment of the present disclosure, the predetermined part types may be determined based on weak parts in the wind turbine design process. For example, the predetermined part types may include a blade, a hub, a tower top, a tower bottom, a gearbox, a main bearing, and the like. Further, non-restricted key parts can be excluded when performing the selection, where the non-restricted key parts represent parts whose load indicators in actual operation are usually consistent with the design indicators. For example, under various wind conditions in the wind farm and under any possible normal control strategy, the load indicators of the non-restricted key parts (for example, the tower bottom) are determined to be consistent with the design indicators based on experience or simulation tests. Therefore, the non-restricted key parts (for example, the tower bottom) may not be considered in determining virtual representative parts.

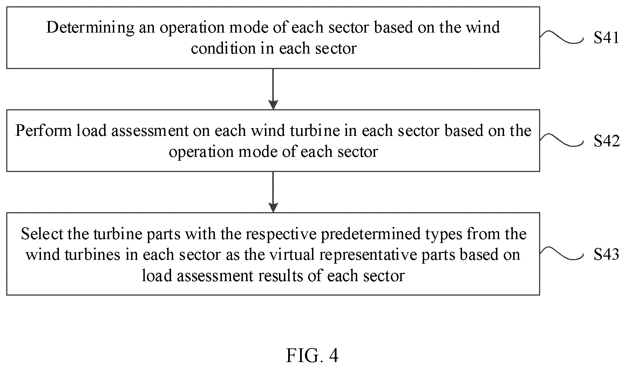

The virtual representative parts may be determined based on an operation mode identified through the wind condition. FIG. 4 is a flowchart of a method for determining a representative wind turbine according to another exemplary embodiment of the present disclosure.

As shown in FIG. 4, an operation mode of each sector is determined, based on the wind condition in each sector (S41). For example, the operation mode includes at least one of the following: the normal power generation operating-condition, the extreme power generation operating-condition, the normal shut-down operating-condition, and the extreme shut-down operating-condition. As described above, a wind condition of the wind turbine during operating corresponds to an operation mode of the wind turbine. Therefore, the operation mode can be determined based on the wind condition.

Load assessment is performed on each wind turbine in each sector, based on the operation mode of each sector (S42). The load assessment may be performed based on predetermined part types to determine the virtual representative parts representing the sector, since a load index is one of the important indicators for wind farm control.

The turbine parts with the respective predetermined types are selected from the wind turbines in each sector as the virtual representative parts, based on load assessment results of each sector (S43). The load assessment results of each sector can helps distinguishing wind turbine parts of the same part type within the sector and are the basis for determining the virtual representative parts.

In an embodiment of the present disclosure, load assessment of the wind turbine parts may be performed by ranking the loads. FIG. 6 is a flowchart of a method for determining a representative wind turbine according to another exemplary embodiment of the present disclosure.

As shown in FIG. 6, for each wind turbine in each sector, for the wind turbines in each sector, each type of load components of turbine parts with a same predetermined type in the sector under each operation mode is acquired (S61). For example, for each wind turbine in each sector, load components (for example, Mx, My, and Mz) of the hub or a blade root under each operation mode (for example, the normal power generation operating-condition, the extreme power generation operating-condition, the normal shut-down operating-condition, the extreme shut-down operating-condition, idling, and the like) may be acquired; load components (for example, a blade tip clearance) of a blade tip under each operation mode (for example, the normal power generation operating-condition, the extreme power generation operating-condition, the normal shut-down operating-condition, the extreme shut-down operating-condition, idling, and the like) may be acquired; load components (for example, a tooth root load, a tooth surface load, a bearing load) of the gearbox under each operation mode (for example, the normal power generation operating-condition, the extreme power generation operating-condition, the normal shut-down operating-condition, the extreme shut-down operating-condition, idling, and the like) may be acquired.

For each type of load components of the turbine parts with a same predetermined type, the turbine parts with the same predetermined type are ranked according to load component values of this type of load components (S62). The turbine parts can be evaluated in multiple dimensions through ranking according to different types of load components. An example is shown in the table below, where a turbine part number is a number of the wind turbine in which the part is located.

Table 1

| Sector number | Turbine part with a predetermined type | Type of load components | Ranking result of turbine parts with respective turbine part numbers |
|---|---|---|---|
| 0 | Hub | Mx | A1, A2, B1,C2,... |
|   |     | My | B1,A1,A5,C2,... |
|   |     | Mz | A1,A2, B1,C2,... |
| 0 | Blade root | Mx | B2,A1,A5,C2,... |
|   |     | My | A2, B1, A1,C2,... |
|   |     | Mz | C2,A2,A4,B3,... |
| 0 | Blade hip | Clearance | C2,A1,A4,B1,... |
| ... | ... |   |   |
| 15 | Gearbox | Tooth root load | A5, A2, B1,C2,... |
|   |     | Tooth surface load | A5, A2, B1,C2,... |
|   |     | Bearing load | A5, A2, B1,C2,... |

In an embodiment of the present disclosure, for each type of load components of the turbine parts with the same predetermined type, a turbine part with a maximum load component is determined as a virtual representative part for each sector, based on ranking results of each sector.

Again, as shown in FIG. 1, a virtual representative turbine for each sector under each operation mode is constructed, based on the virtual representative parts in each sector under each wind condition (S14). A model database of virtual representative turbines in the wind farm is established by constructing virtual representative turbines, to facilitate wind farm control under different wind conditions. The relevant information of the virtual representative wind turbines can be recorded in a form of a mapping relationship table, as shown in the following table.

Table 2

| Operation mode | Sector number | Virtual representative turbine | Turbine part with a predetermined type | Type of load components | Turbine part number |
|---|---|---|---|---|---|
| Normal power generation operating-condition | 0 | $X_{WTG,1}$ | Hub | Mx | A1 |
| | | | | My | B1 |
| | | | | Mz | A1 |
| | | | Blade root | Mx | B2 |
| | | | | My | A2 |
| | | | | Mz | C2 |
| | | | Blade hip | Clearance | C2 |
| | | | ...... | ...... | |
| | | | Gearbox | Tooth root load | A5 |
| | | | | Tooth surface load | A5 |
| | | | | Bearing load | A5 |
| | ...... | ...... | ...... | ...... | ...... |
| | 15 | $X_{WTG,2}$ | | | |
| ...... | | | | | |
| Extreme shut-down operating-condition | 15 | $X_{WTG,2}$ | ...... | ...... | ...... |

As shown in the table above, in the same sector and under the same operation mode, the virtual representative turbine has a one-to-one correspondence with the sector it represents. Therefore, one physical wind turbine in a sector will not be represented by two different virtual representative turbines.

In addition, the sectors may be further divided to avoid deviations in the selection of virtual representative parts caused by differences within the sectors (for example, differences in terrain, and differences in wind speed distribution).

In another embodiment of the present disclosure, each sector can be divided into a predetermined number of sub-sectors, based on the wind source data in each sector. For example, a flow field simulation for the wind farm may be performed to obtain the wind resource information in each sector (such as the wind speed, the turbulence intensity, the air density, the wind shear, and the inflow angle). Wind turbines in each sector are grouped based on the wind resource information. For example, all the wind resource information may be normalized to a range of (0,1); a clustering algorithm (for example, k Mean clustering algorithm) may be performed to divide wind turbines into a preset number of groups; turbine numbers of the wind turbines corresponding to each group in the sector are recorded to establish a grouping information table corresponding to the wind farm. An example is shown in the table below. An identifier of each wind turbine may be represented a sector number, a group number, and a turbine number collectively. For example, an identifier 0-g0-A1 of a wind turbine indicates that the corresponding sector number is 0, the group number is 0, and the turbine number is A1 of the wind turbine. The identifier of each wind turbine is unique. One wind turbine will not locate in two sectors, or one wind turbine will not be in two groups in a sector. Therefore, the sector where the wind turbine is located and the group of the wind turbine within the sector can be identified through the identifier of the wind turbine.

Table 3

| Sector number | Group number | Turbine number |
|---|---|---|
| 0 | g0 | A1, A2, ...... |
| 0 | g1 | A3, A4, ······ |
| 1 | g0 | A2, A3, ...... |
| ...... | ...... | ...... |

EP 4 579 075 A1

(continued)

| Sector number | Group number | Turbine number |
|---|---|---|
| 15 | g3 | A4, A5, …… |

Therefore, for each type of load components of the turbine parts with the same predetermined part type, turbine parts with the same predetermined part type in each sub-sector are ranked based on the load component values of this type of load components. For example, based on ranking results of each type of load components in a sub-sector of each sector and for each type of load components of the turbine parts with the same predetermined type, a turbine part with a maximum load component in the turbine parts with the same predetermined type in the sub-sector is determined as a virtual representative part for the sub-sector. In this way, a virtual representative turbine for each sector under each operation mode is constructed based on the virtual representative parts in each sector under different wind conditions through: constructing a virtual representative turbine for each sub-sector under each operation mode based on the virtual representative parts in the sub-sector of each sector under each wind condition. In this way, the division of sectors can be further refined and the accuracy of selecting virtual representative turbines can be improved.

According to the embodiment of the present disclosure, the method further includes: determining and storing a virtual mapping relationship for each sector under each operation mode based on the virtual representative parts in each sector under each wind condition. For example, the virtual mapping relationship for each sector under each operation mode comprises a mapping relationship between each virtual representative turbine and at least one of the following: the sector, a wind turbine where each of virtual representative parts of the virtual representative turbine is located, the operation mode, a predetermined type corresponding to each of the virtual representative parts of the virtual representative turbine, and a type of load components corresponding to each of the virtual representative parts of the virtual representative turbine (for example, Table 2).

The virtual representative turbine for each sector under a real-time operation mode can be detected in real time based on the virtual mapping relationship during the real-time control process of the wind farm by storing the virtual mapping relationship of each sector under each operation mode, and the wind farm is accurately controlled based on the operating parameters of the virtual representative turbines. The operating parameters of the virtual representative turbines may be acquired through the SCADA system of the wind farm, and the operating parameters may include SCADA data obtained by the SCADA system.

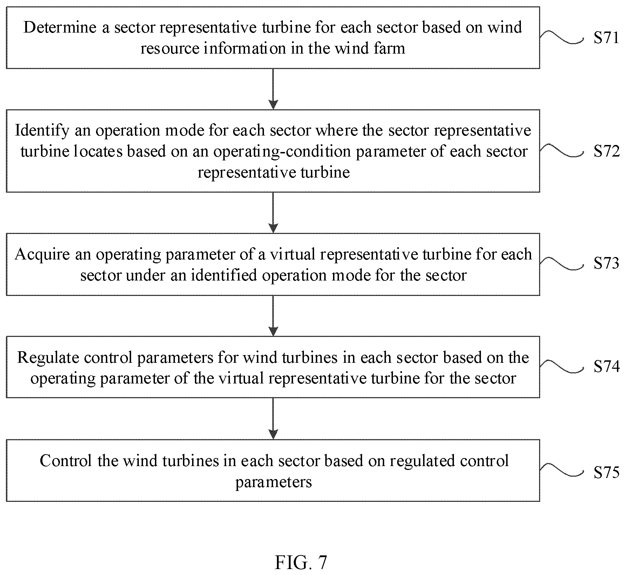

FIG. 7 is a flowchart of a method for controlling a wind farm according to an exemplary embodiment of the present disclosure.

A sector representative turbine for each sector is determined based on wind resource information in the wind farm (S71). As described above, in the embodiment of the present disclosure, the wind resource information may include at least one of the following items: an average wind speed in a sector where each wind turbine locates, probability density distribution for wind speed, an overall turbulence intensity, an inflow angle, wind shear, air density, a wake effect, and an extreme wind condition. The wind resource information can be acquired through any device that monitors or predicts wind speed data in the wind farm. The sector representative wind turbine may be determined by converting the coordinate system based on the incoming wind direction in the wind farm.

An operation mode for each sector where the sector representative turbine locates is identified based on an operating-condition parameter of each sector representative turbine (S72). For example, the operating-condition parameter may include: measured wind speed data, turbine operating data, head orientation data and the like of the sector representative turbine. The operation mode of the sector representative turbine can be identified based on the operating-condition parameter, such as a normal power generation operating-condition, an extreme power generation operating-condition, a normal shut-down operating-condition, an extreme shut-down operating-condition, idling, and the like.

An operating parameter of a virtual representative turbine under an identified operation mode in each sector is determined (S73). The operating parameter of the virtual representative turbine may be acquired through the SCADA system of the wind farm, and the operating parameter may include SCADA data obtained by the SCADA system. For example, the operating parameter may include a load parameter of a virtual representative part in the virtual representative turbine. In the embodiment of the present disclosure, the virtual representative turbine is determined based on the method for determining a representative wind turbine in a wind farm described above. For example, the virtual representative turbine under the identified operation mode in each sector may be determined by performing search in the virtual mapping relationship of each sector in different operation modes.

In the embodiment of the present disclosure, a physical load sensor may be installed on each virtual representative part of the virtual representative turbine or a virtual load sensor (established through machine learning) may be established for each virtual representative part to monitor the load parameter of each virtual representative part.

A control parameter of each wind turbine in each sector is regulated based on the operating parameter (S74). For example, a hub load index, a blade root load index, a blade tip clearance index, and the like may be determined based on

11

various monitored load parameters. Moreover, a corresponding control parameter can be determined based on the load parameter. For example, a control parameter inverse model may be used to determine a pitch angle parameter, an impeller rotational-speed parameter, an output power parameter, a generator torque parameter, a nacelle acceleration parameter, and the like. Accordingly, the control parameter can be regulated based on the load index and the control parameter determined by the operating parameter. A control parameter inverse model is obtained by a machine learning algorithm, where the control parameter inverse model takes the load parameter as an input and the control parameter as an output.

The wind turbines in each sector are controlled based on respective regulated control parameters (S75). For example, a control instruction for each wind turbine may be generated based on the regulated control parameter thereof to adjust the operation of the wind turbine in real time.

In this way, the wind farm can be controlled in real time based on the sector representative turbines and the virtual representative turbines, thereby improving the accuracy and real-time performance of the control.

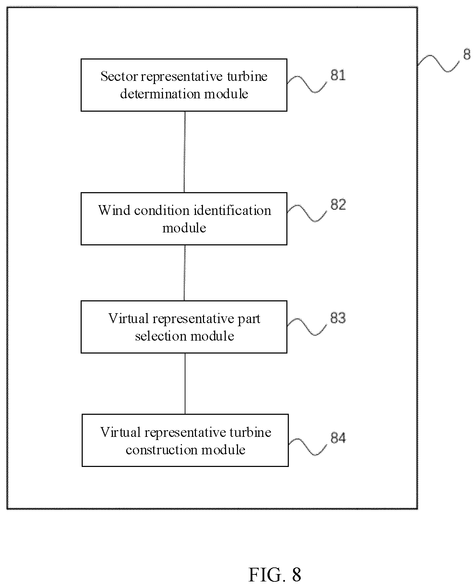

FIG. 8 is a block diagram of an apparatus 8 for determining a representative wind turbine in a wind farm W according to an exemplary embodiment of the present disclosure.

The apparatus 8 includes: a sector representative turbine determination module 81, configured to determine a sector representative turbine in each sector based on wind resource information for the wind farm; a wind conditions identification module 82, configured to identify wind conditions of each sector where the sector representative turbine locates, based on an operating-condition parameter of each sector representative turbine; a virtual representative part selection module 83, configured to select a turbine part with a predetermined type from a wind turbine in each sector as a virtual representative part, based on wind conditions in each sector; and a virtual representative turbine construction module 84, configured to construct a virtual representative turbine for each sector in different operation modes, based on the virtual representative part in each sector under different wind conditions.

Operations of modules in the apparatus 8 may be understood with reference to the exemplary description in FIG. 1 to FIG. 7, and are not repeated here for the sake of brevity.

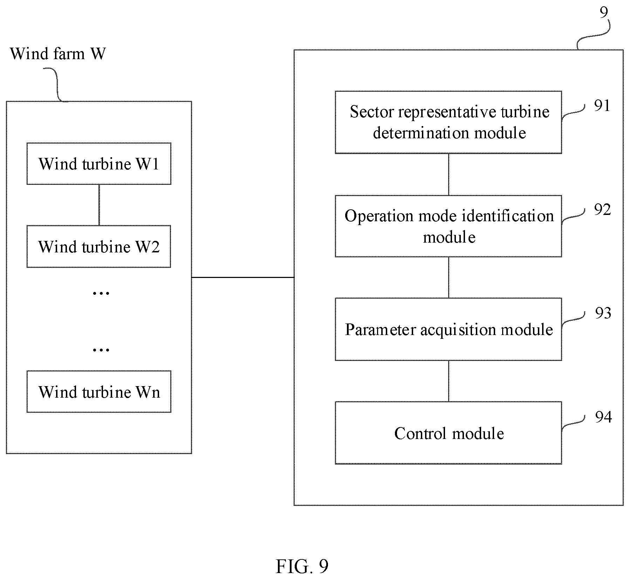

FIG. 9 is a block diagram of an apparatus 9 for controlling a wind farm W according to an exemplary embodiment of the present disclosure.

As shown in FIG. 9, n wind turbines W1, W2...Wn are arranged in the wind farm W.

The apparatus 9 may include: a sector representative turbine determination module 91, configured to determine a sector representative turbine in each sector based on wind resource information for the wind farm; an operation mode identification module 92, configured to identify an operation mode for each sector where the sector representative turbine locates, based on an operating-condition parameter of each sector representative turbine; a parameter acquisition module 93, configured to acquire an operating parameter for a virtual representative turbine in an identified operation mode in each sector, where the virtual representative turbine is determined based on the method for determining the representative wind turbine in the wind farm described above; and a control module 94, configured to regulate a control parameter for the wind turbine in each sector, based on the operating parameter; and control the wind turbine in each sector based on a regulated control parameter.

Operations of modules in the apparatus 9 may be understood with reference to the exemplary description in FIG. 1 to FIG. 8, and are not repeated here for the sake of brevity.

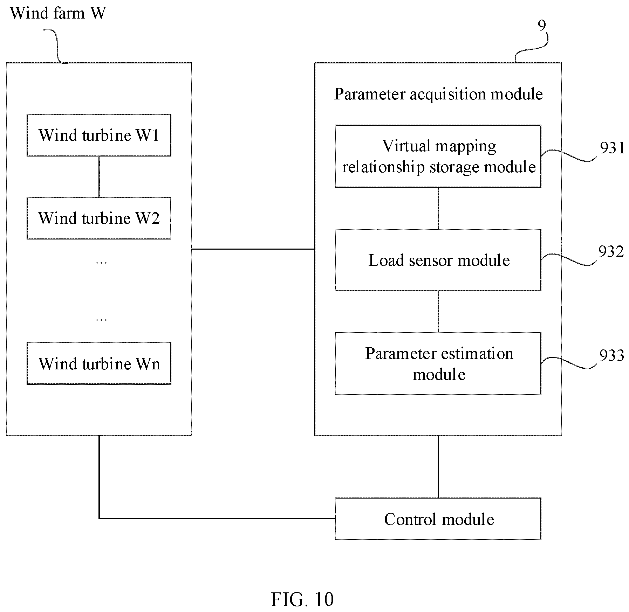

FIG. 10 is a block diagram of some parts in an apparatus for controlling a wind farm according to an exemplary embodiment of the present disclosure.

In the embodiment shown in FIG. 10, the parameter acquisition module 93 may include a virtual mapping relationship storage module 931, a load sensor module 932 and a parameter estimation module 933. The virtual mapping relationship storage module 931 may be configured to store a model database of the virtual representative turbine in the wind farm, so as to determine the virtual representative turbine in each sector in the identified operation mode by searching the virtual mapping relationship of each sector in different operation modes. The load sensor module 932 may be configured to monitor the load parameter of each virtual representative part, which may include a physical load sensors arranged on each virtual representative part of the virtual representative turbine, and/or virtual load sensors established for each virtual representative part (established via machine learning). The parameter estimation module 933 may be configured to determine a corresponding control parameter based on the load parameter. For example, the control parameter (such as a pitch angle parameter, an impeller speed parameter, an output power parameter, a generator torque parameter and a nacelle acceleration parameter).

The parameter acquisition module 93 may output the load parameter and the control parameter to the control module 94 to generate control instructions for controlling each wind turbine in the wind farm W through the control module 94.

In this way, the sector representative wind turbine changes with the change of operating characteristics of the wind farm. Each wind turbine in the wind farm can be controlled in real time based on the real-time output of the virtual representative turbine.

A system for controlling a wind farm is provided according to the embodiment of the present disclosure, including: a farm-level controller, including the apparatus for controlling the wind farm according the embodiment of the present disclosure, and configured to send control instructions to each wind turbine; and a stand-alone controller, arranged in the wind turbine, and configured to control an operation of the wind turbine, based on control instructions received from the farm-level controller. For example, a field-level controller may be arranged in the wind farm W to perform a cluster control on the wind turbines in the wind farm. n stand-alone controllers are respectively provided in the wind turbines W1, W2...Wn of the wind farm W for controlling each wind turbine respectively in response to control instructions received from the field-level controller.

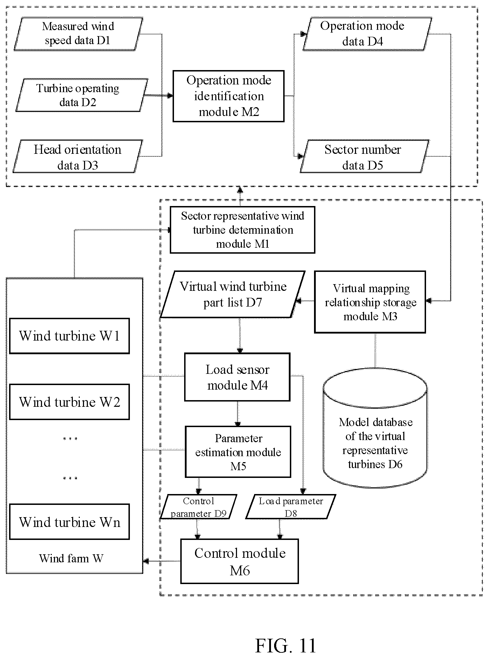

FIG. 11 is a schematic diagram illustrating a cluster control of a wind farm according to an exemplary embodiment of the present disclosure.

As shown in Figure 11, the sector representative wind turbine determination module M1 determines the sector representative wind turbine of each sector based on the wind resource information in the wind farm W. The operation mode identification module M2 in the sector representative wind turbine of each sector can identify the operation mode of the sector where the sector representative wind turbine is located based on the working parameter of the sector representative wind turbine. For example, the operating-condition parameter may include: measured wind speed data for the sector representative turbine D1, operating data for the wind turbine D2, head orientation data D3, and the like. The operation mode identification module M2 acquires the measured wind speed data D1, the operating data for the wind turbine D2, head orientation data D3, and the like, to generate and output operation mode data D4 indicating the operation mode of the sector and sector number data D5 indicating the sector number.

The virtual mapping relationship storage module M3 retrieves the model database of the virtual representative turbine D6 based on the acquired operation mode data D4 the and sector number data D5, so as to generate a virtual wind turbine part list D7 in each sector by retrieving the virtual mapping relationship of each sector in different operation modes, thereby determining the virtual representative turbine of each sector in the identified operation mode.

The load sensor module M4 is configured to obtain the load parameter D8 of each virtual wind turbine part in the virtual representative turbine based on the virtual wind turbine part list D7. For example, the load sensor module M4 is able to obtain the load parameter D8 of the virtual representative part through the SCADA system of the wind farm.

The parameter estimation module M5 is configured to determine the corresponding control parameter D9 based on the load parameter D8. The control module M6 can adjust control parameters of the wind turbines in each sector based on the load parameter D8 and the control parameter D9, and generate and output control instructions based on the adjusted control parameters to control each wind turbine in the wind farm W. In this way, real-time cluster control of the wind farm can be improved.

A computer-readable storage medium is provided according to the embodiment of the present disclosure, where a computer program is stored in the computer-readable storage medium; the computer program, when executed by the processor, implements the method for determining the representative wind turbine in the wind farm or the method for controlling the wind farm according to the embodiment of the present disclosure.

In the embodiment of the present disclosure, the computer-readable storage medium may store one or more programs. When the computer program is executed, the following operations of the method for determining the representative wind turbine in the wind farm described in FIG. 1 to FIG. 6 can be achieved: determining a sector representative turbine in each sector based on wind resource information for the wind farm; identifying wind conditions of each sector, based on an operating-condition parameter of the sector representative turbine in each sector; selecting a turbine part with a predetermined type from a wind turbine in each sector as a virtual representative part, based on wind conditions in each sector; and constructing a virtual representative turbine for each sector in different operation modes, based on the virtual representative part in each sector under different wind conditions. In the embodiment of the present disclosure, the computer-readable storage medium may store one or more programs. When the computer program is executed, the following operations of the method for controlling the wind farm described in FIG. 7 can be achieved: determining a sector representative turbine in each sector based on wind resource information for the wind farm; identifying an operation mode for each sector where the sector representative turbine locates, based on an operating-condition parameter of each sector representative turbine; obtaining an operating parameter for a virtual representative turbine in an identified operation mode in each sector, where the virtual representative turbine is determined based on the method for determining the representative wind turbine in the wind farm according to the embodiment of the present disclosure; regulating a control parameter for the wind turbine in each sector, based on the operating parameter; and controlling the wind turbine in each sector based on a regulated control parameter.

The computer-readable storage medium may be, but is not limited to, an electrical, magnetic, optical, electromagnetic, infrared, or semiconductor system, apparatus, or device, or any combination thereof. More specific examples of the computer-readable storage medium may include, but are not limited to: an electrical connection with one or more wires, a portable computer disk, a hard disk, a random access memory (RAM), a read only memory (ROM), an erasable programmable read only memory (EPROM or a flash memory), an optical fiber, a portable compact disk read only memory (CD-ROM), an optical storage device, a magnetic storage device, or any suitable combination of the above. In the embodiments of the present disclosure, the computer-readable storage medium may be any tangible medium that contains or stores a computer program, and the computer program may be used by or in combination with an instruction execution system, apparatus, or device. The computer program stored in the computer-readable storage medium may be transmitted by any suitable medium, including but not limited to: a wire, an optical cable, RF (Radio Frequency), or any suitable combination of the above. The computer-readable storage medium may be arranged in any apparatus, or may be separate without being arranged into the apparatus.

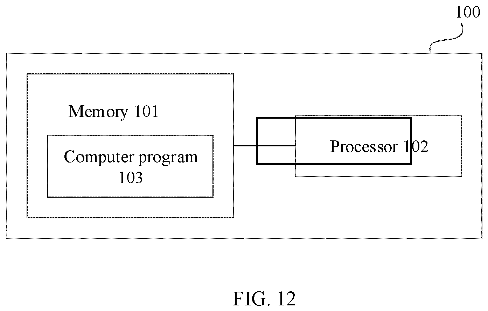

FIG. 12 is a block diagram of a controller according to an exemplary embodiment of the present disclosure.

As shown in FIG. 12, a controller 100 according to an embodiment of the present disclosure may include a memory 101 and a processor 102, and a computer program 103 is stored on the memory 101. When the computer program 103 is executed by the processor 102, the method for determining the representative wind turbine in the wind farm or the method for controlling the wind farm according to the embodiment of the present disclosure is implemented.

In the embodiment of the present disclosure, when the computer program 103 is executed by the processor 102, the following operations of the method for determining the representative wind turbine in the wind farm described in FIG. 1 to FIG. 6 can be achieved: determining a sector representative turbine in each sector based on wind resource information for the wind farm; identifying wind conditions of each sector, based on an operating-condition parameter of the sector representative turbine in each sector; selecting a turbine part with a predetermined type from a wind turbine in each sector as a virtual representative part, based on wind conditions in each sector; and constructing a virtual representative turbine for each sector in different operation modes, based on the virtual representative part in each sector under different wind conditions. In the embodiment of the present disclosure, the computer-readable storage medium may store one or more programs. When the computer program 103 is executed by the processor 102, the following operations of the method for controlling the wind farm described in FIG. 7 can be achieved: determining a sector representative turbine in each sector based on wind resource information for the wind farm; identifying an operation mode for each sector where the sector representative turbine locates, based on an operating-condition parameter of each sector representative turbine; obtaining an operating parameter for a virtual representative turbine in an identified operation mode in each sector, where the virtual representative turbine is determined based on the method for determining the representative wind turbine in the wind farm according to the embodiment of the present disclosure; regulating a control parameter for the wind turbine in each sector, based on the operating parameter; and controlling the wind turbine in each sector based on a regulated control parameter.

The controller shown in FIG. 12 is only an example and should not restrict the function and the usage scope of the embodiments of the present disclosure.

The method and apparatus for determining representative wind turbines in the wind farm and the method and apparatus for controlling the wind farm according to embodiments of the present disclosure are described above with reference to FIG. 1 to FIG. 12. However, it should be understood that: the apparatuses shown in FIG. 8 to FIG. 10 and their respective units may be configured to perform specific functions using software, hardware, firmware, or any combination of the above, and the controller shown in FIG. 12 is not limited to include the parts shown above, but some parts can be added or deleted as required, and the above parts can also be combined.

At least one of the following technical effects is achieved with the method and the apparatus for determining the representative wind turbine in the wind farm, the method and the apparatus for controlling the wind farm, the system for controlling the wind farm, the computer-readable storage medium and the controller provided in the embodiments of the present disclosure. A database of virtual representative turbine models is established by constructing a virtual representative turbine through selecting a predetermined part type in the wind farm, in response to operating characteristics of the wind farm (for example, wind resource information for the wind farm and operating parameters of the wind turbine). Operating conditions of the wind farm under different wind conditions are identified accurately and rapidly in real-time control process, based on the sector representative turbine and the virtual representative turbine. A real-time cluster control of the wind farm is improved (for example, within a second level) and safe operation for each wind turbine in the wind farm is guaranteed, due to a synchronous change of the virtual representative turbine with a change of an operation feature of the wind farm.

The control logics or functions implemented by various parts or controllers in the control system may be illustrated by a flowchart or similar diagram in one or more of the figures. These figures provide representative control strategies and/or logics that may be implemented using one or more processing strategies (e.g., event-driving, interrupt-driving, multi-tasking, multi-threading). Accordingly, various steps or functions shown may be performed in the order shown, or performed in parallel, or omitted in some cases. Although not always explicitly shown, those skilled in the art will recognize that one or more of the steps or functions shown may be repeatedly performed depending on the particular processing strategy used.

Although the present disclosure has been represented and described with reference to preferred embodiments, it should be understood by those skilled in the art that, various modifications and variations may be made to these embodiments without departing from the spirit and scope of the present disclosure defined by the claims.

Claims

1. A method for determining a representative wind turbine in a wind farm, comprising:

determining a sector representative turbine for each sector based on wind resource information in the wind farm;
based on an operating-condition parameter of the sector representative turbine for each sector, identifying a wind condition in each sector;
selecting turbine parts with respective predetermined types from wind turbines in each sector as virtual representative parts based on the wind condition in each sector; and
constructing a virtual representative turbine for each sector under each operation mode based on the virtual representative parts for each sector under each wind condition.

2. The method according to claim 1, wherein the selecting turbine parts with respective predetermined types from wind turbines in each sector as virtual representative parts based on the wind condition in each sector comprises:

determining an operation mode of each sector based on the wind condition in each sector;
performing load assessment on each wind turbine in each sector based on the operation mode of each sector; and
selecting the turbine parts with the respective predetermined types from the wind turbines in each sector as the virtual representative parts based on load assessment results of each sector.

3. The method according to claim 2, wherein the performing load assessment on each wind turbine in each sector based on the operation mode of each sector comprises:

for the wind turbines in each sector, acquiring each type of load components of turbine parts with a same predetermined type in the sector under each operation mode; and
for each type of load components of the turbine parts with the same predetermined type, ranking the turbine parts with the same predetermined type according to load component values of this type of load components.

4. The method according to claim 3, wherein the selecting turbine parts with respective predetermined types from wind turbines in each sector as virtual representative parts based on the wind condition in each sector comprises:
for each type of load components of the turbine parts with the same predetermined type, determining a turbine part with a maximum load component as a virtual representative part for each sector based on ranking results of the sector.

5. The method according to claim 3, wherein the selecting turbine parts with respective predetermined types from wind turbines in each sector as virtual representative parts based on the wind condition in each sector , further comprises:

dividing each sector into a predetermined number of sub-sectors based on wind resource data in each sector; and
the for each type of load components of the turbine parts with the same predetermined type, ranking the turbine parts with the same predetermined type according to load component values of this type of load components comprises: for each type of load components, ranking turbine parts with the same predetermined type in each sub-sector based on the load component values of this type of load components.

6. The method according to claim 5, wherein the selecting turbine parts with respective predetermined types from wind turbines in each sector as virtual representative parts based on the wind condition in each sector comprises:

for each type of load components of the turbine parts with the same predetermined type in each sub-sector and based on ranking results of this sub-sector, determining a turbine part with a maximum load component as a virtual representative part for this sub-sector; and
the constructing a virtual representative turbine for each sector under each operation mode based on the virtual representative parts for each sector under each wind condition comprises: constructing a virtual representative turbine for each sub-sector under each operation mode based on virtual representative parts for this sub-sector under each wind condition.

7. The method according to claim 1, further comprising:
determining and storing a virtual mapping relationship for each sector under each operation mode based on the virtual representative parts for each sector under each wind condition.

8. The method according to claim 7, wherein the virtual mapping relationship for each sector under each operation mode comprises a mapping relationship between each virtual representative turbine and at least one of the following: the sector, a wind turbine where each of virtual representative parts of the virtual representative turbine is located, the operation mode, a predetermined type corresponding to each of the virtual representative parts of the virtual representative turbine, and a type of load components corresponding to each of the virtual representative parts of the virtual representative turbine.

9. The method according to claim 1, wherein sectors in the wind farm are reorganized sectors obtained by reorganizing all initial sectors in the wind farm; and
the determining a sector representative turbine for each sector based on wind resource information in the wind farm comprises:

   determining a sector representative turbine for each initial sector based on a direction of an incoming wind in the wind farm;
   reorganizing all the initial sectors to obtain the reorganized sectors based on the sector representative turbine and a damage potential index for each initial sector, wherein the damage potential index is determined based on a wind speed, a probability density for the wind speed, and a turbulence intensity for the wind speed; and
   determining a sector representative turbine for each reorganized sector based formation information of the reorganized sector.

10. The method according to claim 9, wherein the reorganizing all the initial sectors to obtain the reorganized sectors based on the sector representative turbine and a damage potential index for each initial sector comprises:

   merging two adjacent initial sectors to obtain a reorganized sector, if a damage potential index difference between the two adjacent initial sectors is minimum and less than a preset index difference; and
   merging two adjacent sectors comprising a reorganized sector and an initial sector to obtain a reorganized sector, if a damage potential index difference between the two adjacent sectors comprising the reorganized sector and the initial sector is minimum and less than the preset index difference.

11. The method according to claim 10, wherein the determining a sector representative turbine for each reorganized sector based formation information of the reorganized sector comprises:

   determining, in response to a first reorganized sector being formed by merging two adjacent initial sectors, a sector representative turbine for an initial sector with a larger damage potential index in the two adjacent initial sectors as a sector representative turbine for the first reorganized sector; and/or
   determining, in response to a second reorganized sector being formed by merging two adjacent sectors comprising a reorganized sector and an initial sector, a sector representative turbine for this initial sector as a sector representative turbine for the second reorganized sector.

12. The method according to claim 9, wherein the determining a sector representative turbine for each initial sector based on a direction of an incoming wind in the wind farm comprises:

   converting a geographical coordinate system into a wind direction coordinate system, based on the direction of the incoming wind in the wind farm; and
   determining the sector representative turbine for each initial sector based on the wind direction coordinate system.

13. The method according to claim 12, wherein the determining the sector representative turbine for each initial sector based on the wind direction coordinate system comprises:
determining the sector representative turbine for each initial sector based on a y-axis projection value in the wind direction coordinate system, wherein a positive direction for the y-axis is an opposite direction of the incoming wind.

14. The method according to any one of claims 1 to 13, wherein the wind condition comprises at least one of the following: a wind condition for a normal power generation operation, a wind conditions for an extreme power generation operation, a wind condition for a normal shut-down operation, and a wind condition for an extreme shut-down operation; and
the operation mode comprises at least one of the following: a normal power generation operating-condition, an extreme power generation operating-condition, a normal shut-down operating-condition, and an extreme shut-down operating-condition.

15. A method for controlling a wind farm, comprising:

determining a sector representative turbine for each sector based on wind resource information in the wind farm;
identifying, based on an operating-condition parameter of the sector representative turbine for each sector, an operation mode for the sector;
acquiring an operating parameter of a virtual representative turbine for each sector under an identified operation mode for the sector, wherein the virtual representative turbine is determined based on the method according to any one of claims 1 to 14;
regulating control parameters for wind turbines in each sector based on the operating parameter of the virtual representative turbine for the sector; and
controlling the wind turbines in each sector based on regulated control parameters.

16. The method according to claim 15, wherein the operating parameter comprises: a load parameter of a virtual representative part in a virtual representative turbine.

17. An apparatus for determining a representative wind turbine in a wind farm, comprising:

a sector representative turbine determination module, configured to determine a sector representative turbine for each sector based on wind resource information in the wind farm;
a wind condition identification module, configured to identify, based on an operating-condition parameter of the sector representative turbine for each sector, a wind condition in each sector;
a virtual representative part selection module, configured to select turbine parts with respective predetermined types from wind turbines in each sector as virtual representative parts based on the wind condition in each sector; and
a virtual representative turbine construction module, configured to construct a virtual representative turbine for each sector under each operation mode based on the virtual representative parts for each sector under each wind condition.

18. An apparatus for controlling a wind farm, comprising:

a sector representative turbine determination module, configured to determine a sector representative turbine for each sector based on wind resource information in the wind farm;
an operation mode identification module, configured to identify, based on an operating-condition parameter of the sector representative turbine for each sector, an operation mode for the sector;
a parameter acquisition module, configured to acquire an operating parameter of a virtual representative turbine for each sector under an identified operation mode for the sector, wherein the virtual representative turbine is determined based on the method according to any one of claims 1 to 12; and
a control module, configured to regulate control parameters for wind turbines in each sector based on the operating parameter of the virtual representative turbine for the sector; and control the wind turbines in each sector based on regulated control parameters.

19. A system for controlling a wind farm, comprising:

a farm-level controller, comprising the apparatus for controlling a wind farm according to claim 18, and configured to send control instructions to each wind turbine; and
a stand-alone controller, arranged in each wind turbine, and configured to control an operation of the wind turbine, based on the control instructions received from the farm-level controller.

20. A computer-readable storage medium storing a computer program, wherein the computer program, when executed by the processor, implements the method for determining a representative wind turbine in a wind farm according to any one of claims 1 to 14, or implements the method for controlling a wind farm according to any one of claims 15 to 16.

21. A controller, comprising:

a processor; and
a memory storing a computer program, wherein the computer program, when executed by the processor, implements the method for determining a representative wind turbine in a wind farm according to any one of claims 1 to 14, or implements the method for controlling a wind farm according to any one of claims 15 to 16.

Determine a sector representative turbine for each sector based on wind resource information in the wind farm    S11

Based on an operating-condition parameter of the sector representative turbine for each sector, identify a wind condition in each sector    S12

Select turbine parts with respective predetermined types from wind turbines in each sector as virtual representative parts based on the wind condition in each sector    S13

Construct a virtual representative turbine for each sector under each operation mode based on the virtual representative parts for each sector under each wind condition    S14

FIG. 1

Determine a sector representative turbine for each initial sector based on a direction of an incoming wind in the wind farm ⟿ S21

Reorganize all the initial sectors to obtain the reorganized sectors based on the sector representative turbine and a damage potential index for each initial sector ⟿ S22

Determining a sector representative turbine for each reorganized sector based formation information of the reorganized sector ⟿ S23

FIG. 2

FIG. 3

| Determining an operation mode of each sector based on the wind condition in each sector | S41 |

| Perform load assessment on each wind turbine in each sector based on the operation mode of each sector | S42 |

| Select the turbine parts with the respective predetermined types from the wind turbines in each sector as the virtual representative parts based on load assessment results of each sector | S43 |

FIG. 4

Measured wind speed data  51

Free-stream transfer function  53

Corrected wind speed data  54

Turbine operating data  52

Wind condition identification model  55

Wind condition identification data  56

FIG. 5

For the wind turbines in each sector, acquire each type of load components of turbine parts with a same predetermined type in the sector under each operation mode  S61

For each type of load components of the turbine parts with the same predetermined type, rank the turbine parts with the same predetermined type according to load component values of this type of load components  S62

FIG. 6

Determine a sector representative turbine for each sector based on wind resource information in the wind farm — S71

Identify an operation mode for each sector where the sector representative turbine locates based on an operating-condition parameter of each sector representative turbine — S72

Acquire an operating parameter of a virtual representative turbine for each sector under an identified operation mode for the sector — S73

Regulate control parameters for wind turbines in each sector based on the operating parameter of the virtual representative turbine for the sector — S74

Control the wind turbines in each sector based on regulated control parameters — S75

FIG. 7

```
┌─────────────────────────────────────────────────────────────┐
│                                                          8    │
│      ┌──────────────────────────────────┐                     │
│      │  Sector representative turbine    │      81            │
│      │  determination module             │                     │
│      └──────────────────────────────────┘                     │
│                                                               │
│                                                               │
│      ┌──────────────────────────────────┐                     │
│      │  Wind condition identification    │      82            │
│      │  module                           │                     │
│      └──────────────────────────────────┘                     │
│                                                               │
│                                                               │
│      ┌──────────────────────────────────┐                     │
│      │  Virtual representative part      │      83            │
│      │  selection module                 │                     │
│      └──────────────────────────────────┘                     │
│                                                               │
│                                                               │
│      ┌──────────────────────────────────┐                     │
│      │  Virtual representative turbine   │      84            │
│      │  construction module              │                     │
│      └──────────────────────────────────┘                     │
│                                                               │
└─────────────────────────────────────────────────────────────┘
```

FIG. 8

Wind farm W

Wind turbine W1

Wind turbine W2

...

...

Wind turbine Wn

9

Sector representative turbine determination module — 91

Operation mode identification module — 92

Parameter acquisition module — 93

Control module — 94

FIG. 9

Wind farm W

9

| Wind turbine W1 |
| --- |

| Wind turbine W2 |
| --- |

...

...

| Wind turbine Wn |
| --- |

Parameter acquisition module

| Virtual mapping relationship storage module | 931 |
| --- | --- |

| Load sensor module | 932 |
| --- | --- |

| Parameter estimation module | 933 |
| --- | --- |

| Control module |
| --- |

FIG. 10

| Measured wind speed data D1 | | | Operation mode data D4 |
|---|---|---|---|

Operation mode identification module M2

| Turbine operating data D2 | | | Sector number data D5 |
|---|---|---|---|

Head orientation data D3

Sector representative wind turbine determination module M1

Virtual wind turbine part list D7

Virtual mapping relationship storage module M3

Wind turbine W1

Wind turbine W2

. . .

. . .

Wind turbine Wn

Wind farm W

Load sensor module M4

Parameter estimation module M5

Model database of the virtual representative turbines D6

Control parameter D9

Load parameter D8

Control module M6

FIG. 11

100

Memory 101

Computer program
103

Processor 102

FIG. 12

## INTERNATIONAL SEARCH REPORT

| International application No. |
| --- |
| **PCT/CN2023/112884** |

| A. | CLASSIFICATION OF SUBJECT MATTER |
| --- | --- |

F03D7/04(2006.01)i;  G06F30/20(2020.01)i

According to International Patent Classification (IPC) or to both national classification and IPC

| B. | FIELDS SEARCHED |
| --- | --- |

Minimum documentation searched (classification system followed by classification symbols)

IPC：F03D G06F

Documentation searched other than minimum documentation to the extent that such documents are included in the fields searched

Electronic data base consulted during the international search (name of data base and, where practicable, search terms used)

CNKI, IEEE, CNTXT, WOTXT, EPTXT, USTXT, CNABS, VEN: 风电, 风力发电, 机组, 发电机, 风资源, 风况, 代表, 组件, 部件, 构件, 参数, 扇区, 虚拟, wind, turbine, power, resource, condition, represent+, module, component, parameter, sector, virtual

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116292094 A (BEIJING GOLDWIND SCIENCE & CREATION WINDPOWER EQUIPMENT CO., LTD.) 23 June 2023 (2023-06-23)<br>claims 1-21 | 1-21 |
| A | CN 110097243 A (BEIJING GOLDWIND SCIENCE & CREATION WINDPOWER EQUIPMENT CO., LTD.) 06 August 2019 (2019-08-06)<br>description, paragraphs 32-93 | 1-21 |
| A | US 2015167637 A1 (GENERAL ELECTRIC COMPANY) 18 June 2015 (2015-06-18)<br>entire document | 1-21 |
| A | CN 115186861 A (OCEAN UNIVERSITY OF CHINA) 14 October 2022 (2022-10-14)<br>entire document | 1-21 |
| A | CN 111441917 A (BEIJING GOLDWIND SCIENCE & CREATION WINDPOWER EQUIPMENT CO., LTD.) 24 July 2020 (2020-07-24)<br>entire document | 1-21 |
| A | US 2016230741 A1 (VESTAS WIND SYSTEMS A/S) 11 August 2016 (2016-08-11)<br>entire document | 1-21 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 October 2023** | **02 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/112884**

| Patent document cited in search report | | | Publication date (day/month/year) | Patent family member(s) | | | Publication date (day/month/year) |
|---|---|---|---|---|---|---|---|
| CN | 116292094 | A | 23 June 2023 | None | | | |
| CN | 110097243 | A | 06 August 2019 | None | | | |
| US | 2015167637 | A1 | 18 June 2015 | DE | 102014118146 | A1 | 18 June 2015 |
| | | | | US | 9822762 | B2 | 21 November 2017 |
| CN | 115186861 | A | 14 October 2022 | None | | | |
| CN | 111441917 | A | 24 July 2020 | None | | | |
| US | 2016230741 | A1 | 11 August 2016 | DK | 3047143 | T3 | 26 March 2018 |
| | | | | WO | 2015039665 | A1 | 26 March 2015 |
| | | | | US | 10364796 | B2 | 30 July 2019 |
| | | | | ES | 2663484 | T3 | 12 April 2018 |
| | | | | EP | 3047143 | A1 | 27 July 2016 |
| | | | | EP | 3047143 | B1 | 21 February 2018 |
| | | | | CN | 105556117 | A | 04 May 2016 |
| | | | | IN | 201617010200 | A | 05 August 2016 |

Form PCT/ISA/210 (patent family annex) (July 2022)